# EUROPEAN PATENT SPECIFICATION

(11) **EP 3 953 176 B1**
(45) Date of publication and mention of the grant of the patent: **03.09.2025**
(21) Application number: 20717987.0
(22) Date of filing: 09.04.2020
(51) Int. Cl.: B32B 37/00, C14B 1/56, D06N 3/00, B32B 38/06, C14B 7/02

(54) **METHOD FOR UPGRADING AND EMBOSSING LEATHER**
VERFAHREN ZUM VEREDELN UND PRÄGEN VON LEDER
PROCÉDÉ DE VALORISATION ET DE GAUFRAGE DE CUIR

(30) Priority: 09.04.2019 NL 2022904
(43) Date of publication of application: 16.02.2022
(73) Proprietor: Stahl International B.V., 5145 PE Waalwijk (NL)
(72) Inventor: RUELLA, Riccardo Giovanni, 36071 Arzignano (IT); SCHERKL, Christian, 5145 PE Waalwijk (NL); BAUER, Harald, 5145 PE Waalwijk (NL)
(74) Representative: V.O.
(86) International application number: PCT/NL2020/050240
(87) International publication number: WO 2020/209717

(56) References cited:
- CN-A- 107 287 363
- IT-A1- UA20 161 537
- JP-A- S51 559
- US-A- 4 002 792
- US-A- 5 284 693
- US-A1- 2002 114 925
- "Decorative laminated sheet manufg - using coated paper to prevent damage during embossing", WPI / THOMSON,, vol. 1976, no. 8, 6 January 1976 (1976-01-06), XP002730994

## Description

The present invention concerns a method for making an upgraded and embossed laminar supporting element, generally leather, by applying several layers of synthetic material on the supporting element and partially removing water from said layers followed by embossing and optionally further drying. In particular, the invention concerns a method for upgrading and embossing leathers that are not of top quality.

The invention concerns also a system for the implementation of said method, in addition to the product obtained through said method and/or said system.

As is known, leather is widely used in several sectors, like for example the automotive, furniture, clothing and shoe sectors. Among the various types of leather, the most expensive part of leather, called pure-grain or full-grain leather, is particularly appreciated, owing to its softness and pleasant haptics.

Embossing of leather is often done, so as to obtain a pattern in the leather, which can be a pattern to mimic the skin characteristics of another animal, such as snake or crocodile, or the skin characteristics of full-grain leather, in cases where, instead of full-grain leather, split leather or corrected grain leather is used, or a pattern that is artistic and not mimicking a skin characteristic. Embossing is generally accomplished in a printing operation with roller or plate presses.

In the current standard process of making embossed leather, the crust is first treated with a number of finishing coatings, usually comprising one or more base coat layers and a top coat layer, subsequently dried and then embossed, whereby large time intervals between the finishing of the leather and the embossing step are possible.

With only perfectly smooth leather good enough for the apparel, accessories and home interior industries, tanners and manufacturers face increased demand for high-end, premium leather. But there is a limit to the available raw material. Therefore tanners and manufacturers have been looking for ways to improve standard leather and make it suitable for high-end applications. This is what is called in the art leather upgrading namely hiding or removing grain defects in lower quality standard leather; the results can be indistinguishable from unimproved premium leather. Upgrading technology solutions have been developed which can turn flawed, average leather into excellent leather. Applying upgrading products to the leather substrate can mask almost any type of grain defect. This increases the quality of the leather and the usable surface area. The result is a higher yield of smooth, fashionable leather with a natural feel and classic elegance. Benefits of upgrading of leather include: higher quality leather with a distinctive look and feel; high consumer satisfaction; most efficient use of raw hides with a higher cutting yield.

Upgrading is often done to hide damages, such as cuts and holes, in the hide or leather or crust. This generally involves applying a coat on the surface of the hide or leather or crust, followed by drying, which is accompanied by shrinking of the volume of the coat into the damaged areas, and then followed by buffing to obtain a smooth surface whereby the original damages are ideally not visible anymore. The upgrading step is usually performed prior to treatment with finish coats and embossing.

During the embossing step, the leather and the coating layers thereon are subjected to high pressure (250 to 300 bar) and high temperature (100 to 110°C) which considerably reduces the thickness (by values in the order of 0.1 to 0.2 mm) of the leather and compacts its structure. Disadvantageously, said embossing step deteriorates the leather's characteristics of softness or its characteristic haptics, and increases its rigidity. According to the known technique, therefore, further steps are necessary in order to provide the leather with more pleasant and soft haptics. These steps typically involve a treatment in a special system, such as stretching or tumbling or equivalent treatments.

This standard production method has some disadvantages.

A first disadvantage is the fact that upgrading and embossing results in undesirable stiffening of the leather product, and moreover this stiffening is not uniformly distributed along one piece of leather as the upgraded parts on the previously visible damaged areas contain more of the upgrading coats and are thus more rigid that the previously undamaged leather parts.

A second disadvantage is that the upgrading layer or layers applied on the leather also contribute to increasing the overall thickness, thus affecting the flexibility and softness and/or haptics of the final leather product.

A third disadvantage is that the upgraded parts on the previously visible damages can remain visible in the final leather product unless a thicker finish coat is applied, which diminishes its natural haptics. In addition, an uneven penetration of coats into the leather product can result in uneven grain break of the leather, which gives an undesirable appearance.

A fourth disadvantage is that several process steps are needed in order to obtain the final leather product, whereby there may be several interruptions between the successive production steps. This limits the speed of production and increases production costs.

EP 3097230 (WO2015/110953) describes a method and system for upgrading hides that are not of top quality. The system employs a release paper, which contains the reverse embossing pattern and which is firstly coated with a lacquer to protect the release paper and to ease the later release thereof. The thus coated release paper is pressed against the partly dried coat of a leather, or a coat on another substrate, and after a drying step the release paper, including the lacquer coat on the release paper, is removed to obtain the final product.

JPS51559 and XP-002730999 describe methods for producing a decorative plywood having a three-dimensional uneven pattern, which is achieved by applying a pattern in a coating that was only partly dried. However, the pattern in the coating is applied using a printing paper.

ITUA20161537A1 describes a method in which a pattern is made into a coating on leather using a cylinder. However, the description is very general and no materials or process conditions are specifically described. ITUA20161537A1 uses thermo-expanding polymers, which are applied on leather, which are subsequently fully dried, after which a top coat is applied and dried, and then a thermoforming cylinder is used to generate the embossing pattern, which will involve the expansion of the thermo-expanding polymers. Obviously, the need for a thermo-expanding polymer is a severe limitation.

Some of the above mentioned disadvantages are solved or partially solved by the method and system described in EP 3097230, but this method and system has several other disadvantages as well. First disadvantage is that by using a release paper, a limitation on the depth of embossing is introduced, because the height of the reverse pattern of a release paper is small. This is a disadvantage, because deep embossed leather represents the largest market share of embossed leather. A second disadvantage is that by using a release paper, the embossing pattern is dependent on the availability of patterns in said release papers. In general there is a larger variety in embossing patterns available from embossing plates or embossing cylinders, such as embossing rotopress rollers. A third disadvantage is that by using a release paper, it is cumbersome to change the pattern to be embossed, because this entails the exchange of the release paper rolls. A fourth disadvantage is that the release paper can easily break, which would result in production interruptions. A fifth disadvantage is that the release paper is expensive and that it is thus desirable to clean and remove the lacquer layer on the release paper, which is an additional processing step. A sixth disadvantage is that the lacquer coat is to be removed from the release paper, which consumes glue or tape.

The object of the present invention is to provide a method for making an upgraded and embossed laminar supporting element, in particular leather, which does not have the above mentioned disadvantages. In particular in the present invention, a protective foil is used, which is removed after the embossing and the drying is completed, and the pattern in the coating is achieved by applying a pressure using an embossing plate or an embossing cylinder or an embossing rotopress roller. In the present invention, any aqueous polymer dispersion can be used as coating, which is partly dried prior to embossing and the polymer in the coating is thus not limited to thermo-expanding polymers.

In particular, it is a first object of the present invention to provide a method that makes it possible to obtain a product that is softer and more pleasant to touch compared to analogous products manufactured with the known techniques or compared to the method and system described in EP 3097230.

It is another object of the present invention to provide a method that makes it possible to obtain deep-embossed leather which is not possible using the method and system described in EP 3097230.

It is a further object of the present invention to provide a method that makes it possible to easily select and easily exchange the embossing patterns which is not possible using the method and system described in EP 3097230.

It is still another object of the present invention to provide a method that allows a broad selection of base coat only having to keep in mind the final properties of the final leather product without having to take into account that such base coat needs to be embossable as is needed in analogous products manufactured with the known techniques or with the method and system described in EP 3097230.

The present invention provides a method for making an upgraded and embossed laminar supporting element according to claim 1, comprising a supporting element, in particular leather, provided with at least one upgrading layer, comprising the following steps:
- applying at least one layer of an aqueous base coating to the surface of a supporting element;
- treating said at least one layer so as to evaporate from said at least one layer between 20% and 80% of the amount of water and optional solvent initially present;
- applying on the thus dried layer at least one layer of a lacquer;
- treating said at least one layer of a lacquer so as to evaporate from said lacquer layer between 20% and 80% of the amount of water and/or solvent initially present;
- applying on the thus dried lacquer layer at least one layer of foil;
- exerting a pressure on the combination of supporting element provided with said aqueous base coating layer, said lacquer layer and said foil layer in such a way so as to emboss the coated surface with morphological characteristics wherein the means for applying said pressure comprises an embossing pattern, and is an embossing cylinder, embossing plate or an embossing rotopress roller;
- removing said at least one layer of foil.

Preferably the method further comprises the step of drying of the combination of supporting element provided with said aqueous base coating layer and said lacquer layer from which the foil layer has been removed;

Preferably the method further comprises the step of applying at least one layer of top coat and further drying.

The supporting element which is to be subjected to the finishing treatment according to the present invention is in general constituted by a supporting element to be upgraded which at the end of the treatment has special characteristics, especially aesthetic characteristics. Suitable supporting elements include textile products such as any natural and/or synthetic and/or mixed fabric including leather and PVC but may also be cardboard. Preferably the supporting element is constituted by leather (hide, crust deriving from the processing of leather, regenerated leather, ..), generally of a lower quality.

The at least one layer of aqueous base coating is preferably applied by using a spraying application, but can also be applied by means of a roller coater or by padding.

Preferably, the aqueous base coating applied to the surface of the supporting element is based on an aqueous polyurethane dispersion, an aqueous polyacrylate dispersion, a hybrid thereof or mixture thereof, in which the presence of co-solvent is optional and preferably further comprising pigments, thickener and additional water to arrive at lower solids content, but preferably no casein nor fillers. Aqueous polyurethane dispersions are preferred if good performance on cold Ballyflexes and cold crack testing is desired, whereas aqueous polyacrylate dispersions are preferred if lower costs are desired. An overview of properties and synthesis methods of aqueous polyurethane dispersions can be found in Chapter 14 "Waterborne Polyurethanes" in textbook 'Szycher's Handbook of Polyurethanes', edited by M Szycher, published 1999 by CRC Press, ISBN 0-8493-0602-7. An overview of properties and synthesis methods of polyacrylates can be found in Chapter "Polyacrylates" in textbook 'Ullmann's Polymers and Plastics: Products and Processes', published 2016 by Wiley-VCH, ISBN 978-3-527-33823-8. The at least one layer of aqueous coating can, for example, comprise PP-39-001 or Neosan 2000 as pigment and Unires RU-13-134, Melio Promul 95.A, Astacin Finish Susi TF as aqueous polyurethane resin or RA-22-063, Melio Resin A-948, Corial Binder EV as aqueous polyacrylic resin, all obtainable from Stahl Europe BV. Optionally, the aqueous coating also contains a crosslinker, such as polycarbodiimide crosslinker, isocyanate crosslinker, aziridine crosslinker or polyurea crosslinker, of which an aqueous polycarbodiimide crosslinker such as XR-13-906, obtainable from Stahl Europe BV, would be preferred.

In addition, preferably, the aqueous base coating formulation has a medium viscosity of between 5 and 120 seconds on Ford Cup 6 scale according to ASTM D1200, more preferably a viscosity between 10 and 100 seconds on Ford Cup 6 scale and most preferably a viscosity between 40 and 80 seconds on Ford Cup 6 scale.

The at least one layer of an aqueous base coating applied to the surface of the supporting element is preferably applied in a small thickness of between 16 g and 48 g of dried matter per square meter (1.5 and 4.5 gram of dried matter per square foot) more preferably in a thickness of dried matter of between 21 and 32 g of dried matter per square meter (2.0 and 3.0 gram per square foot).

The surface of the supporting element onto which said aqueous base coating layer is applied is usually that surface side which will become ultimately the visible side hence the skin side of the leather, not the flesh side.

In a subsequent step, the at least one aqueous base coating layer is treated such that from said layer between 20% and 80% of the initially present amount of water and optional solvent is evaporated. This step usually involves drying in an oven at elevated temperature. More preferably, between 25% and 70% of the initially present amount of water and optional solvent is evaporated and most preferably between 30% and 60% of the initially present amount of water and optional solvent. The oven temperature and the duration of drying inside the oven is chosen such that the desired level of evaporation is achieved. In the context of the present invention it is preferred that the temperature is medium high, such as between 30°C and 50°C and not high, such as above 80°C. In case drying is done in an oven tunnel, the oven temperature and the movement speed through the oven is chosen appropriately. In another embodiment, the partial drying is achieved by irradiation treatment, such as infrared irradiation.

The specific drying degree of said aqueous base coating layer is important in the context of the present invention. Below 20% the base coat is still liquid and can't be easily processed. Above 80% it is more difficult to press a pattern in the layer and problems with release are encountered.

On top of the partially dried aqueous base coating provided on the surface of the supporting element at least one layer of a lacquer is subsequently applied, which can be an aqueous coating or a solvent-based coating and which can also be an aqueous coating or a solvent-based coating that is usually applied as an intermediate coating. The purpose of the lacquer layer is to prevent the subsequently applied foil layer to adhere too much to the base coat which would make later removal of the foil layer too difficult. So the lacquer layer generally has anti-sticking properties. Preferred lacquers for the at least one layer of a lacquer are based on nitrocellulose, which gives good performance and is cost effective, but can give yellowing upon ageing. If yellowing is to be prevented then polyurethanes are preferred, of which aqueous aliphatic polyurethane dispersions are most preferred, or CAB lacquers, which are typically made from mixtures of a cellulose resin called cellulose acetate butyrate (CAB) and acrylic and that give less yellowing than nitrocellulose lacquers. The at least one layer of a lacquer can, for example, comprise Aqualen Top IL.A or Aqualen Top SIL, which are based on polyurethane dispersions, as aqueous lacquer or Melio EW-365.A as nitrocellulose lacquer emulsion or Melio EW-629.C as CAB lacquer emulsion, all obtainable from Stahl Europe BV.

Preferably, the thickness of this lacquer layer is small, below 11 g of dried matter per square meter (1.0 gram of dried matter per square foot), preferably below 5.5 g of dried matter per square meter (0.5 gram per square foot).

The lacquer layer is preferably applied by using a spraying application, but can also be applied by means of a roller coater.

Subsequently the lacquer layer is treated so that between 20% and 80% of the initially present amount of water and/or solvent is evaporated. This usually involves drying in an oven at elevated temperature. More preferably, between 25% and 70% of the initially present amount of water and/or solvent is evaporated and most preferably between 30% and 60% of the initially present amount of water and/or solvent. The degree of drying is important to obtain the envisaged advantageous effects. In the context of the present invention it is preferred that the temperature is medium high, such as between 30°C and 50°C and not high, such as above 80°C. The oven temperature and the duration of drying inside the oven is chosen such that the desired level of partial evaporation is achieved. In case drying is done in an oven tunnel, the oven temperature and the movement speed through the oven is chosen appropriately. In another embodiment, the partial drying is achieved by irradiation treatment, such as infrared irradiation.

The foil layer that is applied on top of the partially dried aqueous base coating and lacquer layers provided on the surface of the supporting element can be any foil that is strong and thin and does not adhere to the already applied coating layers on the supporting element's surface. Typical thickness of a suitable foil is between 4 and 500 micrometer, preferably between 5 and 300 micrometer. The foil functions merely as a protective sheet and hence any suitable foil can be used and can be any commonly used foil. An example of a suitable foil is the plastic foil that is currently used in industry to iron the finished leather to obtain high gloss leather. The foil layer is preferably applied using a rolling cylinder to press the foil onto the partially dried layers provided on the supporting element. Preferably, the rolling cylinder is heated to facilitate the fixation of the foil onto the partially dried layers provided on the supporting element, whereby the temperature of the rolling cylinder is preferably between 30°C and 100°C and more preferably between 50°C and 90°C.

The subsequent step in the method of the present invention involves exerting a pressure on the combination of supporting element provided with said layers in such a way so as to emboss the surface with morphological characteristics; wherein the means for applying said pressure comprises an embossing pattern. This is preferably done using an embossing cylinder, which is preferably part of a rotopress. The embossing cylinder generally contains, in negative, the pattern that is to become imprinted into the layers provided on the supporting element. Embossing cylinders are widely employed in leather industry; major brands generally have their own specific embossing pattern. It is thus advantageous that generally available and applied embossing cylinders can be used in the present invention. In another embodiment of the invention, the embossing is achieved using an embossing plate on an hydraulic press.

Preferably, the embossing step is done under heating, which can be achieved by heating the external surface of the embossing cylinder or embossing plate. Preferably, the embossing cylinder or embossing plate is heated to a temperature between 50°C and 150°C, more preferably between 60°C and 140°C and most preferably between 80°C and 120°C.

Preferably, the embossing is done under medium pressure of between 50 bar and 150 bar, to obtain soft leather, as heavy pressure results in harder and stiffer leather.

The depth of embossing can vary depending on the specific article and the pattern used. In general the embossing depth is between 0.05 mm and 2 mm. For example for hair graining pattern the embossing depth is small and for emulating crocodile or snake skins the embossing depth is large.

The embossing step is followed by removing the layer of foil from the coated supporting element. When a suitable foil is selected this step is easy. For example, the plastic foil that is currently used in industry to iron the finished leather to obtain high gloss leather does not adhere to the coating layers on the leather.

The optional further drying of the combination of supporting element provided with said layers subsequent to removal of foil is preferably done by drying in an oven at elevated temperature. The oven temperature and the duration that the coating is dried inside the oven is chosen such that the desired level of drying is achieved which is generally such that 80% or more of the initially present water and/or solvent has evaporated, so that the finished laminar supporting elements can be easily stored, stacked and piled. The desired level of drying can be achieved within a few minutes at an elevated temperature of, for example, between 70°C and 140°C, but can also be achieved by drying for several hours at room temperature. In case drying is done in an oven tunnel, the oven temperature and the movement speed through the oven is chosen appropriately. In another embodiment, the optional further drying is achieved by irradiation treatment, such as infrared irradiation.

The further optionally applied layer or layers of top coat can be any type of top coat known to a person skilled in the art, but is preferably an aqueous coating comprising a polyurethane dispersion, a polyacrylate dispersion, a hybrid thereof or mixture thereof, in which the presence of co-solvent is optional and which can further comprise thickener, matting agents, slip agents, touch agents, and crosslinker, such as polycarbodiimide crosslinker, isocyanate crosslinker, aziridine crosslinker or polyurea crosslinker.

The optional layer of top coat is preferably applied in a small thickness of between 5.5 and 16 g of dried matter per square meter (0.5 and 1.5 gram of dried matter per square foot, more preferably in a thickness of dried matter of between 7.5 and 14 gram per square meter (0.7 and 1.3 gram per square foot), so that the pattern applied into the layers provided on the supporting element remains present after applying and drying of the top coat layer. A common method of drying the applied top coat is in an oven at elevated temperature. The oven temperature and the duration that the coating is dried inside the oven is chosen such that the desired level of drying is achieved. The desired level of drying is such that 80% or more of the initially present water and/or solvent has evaporated, so that the finished laminar supporting elements can be easily stored and piled. The desired level of drying can be achieved within a few minutes at an elevated temperature of for example 70°C or 80°C, but can also be achieved by drying for several hours at room temperature. In case drying is done in an oven tunnel, the oven temperature and the movement speed through the oven is chosen appropriately. In another embodiment, the drying is achieved by irradiation treatment, such as infrared irradiation.

In another embodiment of the invention, the lacquer layer can also function as ultimate top coat layer.

These and other features, aspects, and advantages of the apparatus, systems and methods of the present disclosure will become better understood from the following description, appended claims, and accompanying drawings.

The invention is described more fully hereinafter with reference to the accompanying drawing, in which embodiments of the invention are shown. In the drawing, the absolute and relative sizes of systems, components, layers, and regions may be exaggerated for clarity. Embodiments may be described with reference to schematic of possibly idealized embodiments and intermediate structures of the invention. Relative terms as well as derivatives thereof should be construed to refer to the orientation as then described or as shown in the drawing under discussion. These relative terms are for convenience of description and do not require that the system be constructed or operated in a particular orientation unless stated otherwise.

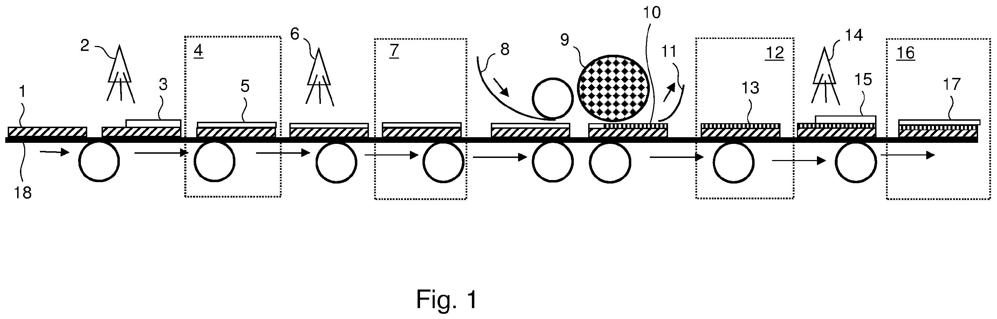

Figure 1 schematically illustrates steps of the method of the present invention and a system for the implementation of said method.

On the (visible) surface of a supporting element such as leather material [1] one or more layers of aqueous base coatings are applied, by means [2] such as spraying or roller coater or other method. The applied base coat(s) [3] are then partially dried [4] in an oven or by irradiation. On the partially dried base (coats) [5] is subsequently applied a lacquer coat, by spraying or roller coater or other method [6]. The article is then partially dried [7] in an oven or by irradiation. A foil [8] is placed on the surface prior to embossing using an embossing cylinder, or embossing plate [9]. The embossed coat on leather, with foil still on it, [10] is the result and subsequently the foil is removed [11]. The optional drying by oven or irradiation [12] results in an embossed coat on leather, dried [13]. Optionally a top coat is applied, by spraying or roller coater or other method [14]. The optionally applied top coat(s) [15] are then optionally dried in an oven or by irradiation [16], resulting in a final leather product with applied base coat, lacquer layer, embossed and optional top coats, dried [17]. The movement of leather along the various steps can be achieved by using a conveyor belt [18], or by any other means of transporting between the various steps of the method.

The present invention also relates to a system for making a laminar supporting element (17) according to claim 17, comprising
- first application means (2) suited to apply at least one base layer (3) of an aqueous coating to a surface of a supporting element (1);
- means (4) for treating said at least one layer so as to evaporate from said at least one layer between 20 and 80% of the amount of water and optional solvent initially present;
- second application means (6) suited to apply at least one layer of lacquer on the thus dried coating (5);
- means (7) for treating said at least one layer of a lacquer so as to evaporate from said at least one layer between 20 and 80% of the amount of water and/or solvent initially present;
- third application means suited to apply at least one layer of foil (8) on the thus dried lacquer coating;
- means (9) for exerting a pressure on the combination of supporting element provided with said aqueous base coating layer, said lacquer layer and said foil layer in such a way so as to emboss the coated surface with morphological characteristics (10) which means includes an embossing cylinder or an embossing plate or an embossing rotopress roller;
- means (11) for removing said at least one layer of foil.

Preferably the system comprises also means (12) for further drying the combination (13) of supporting element provided with said aqueous base coating layer and said lacquer layer;

Preferably the system also comprises fourth application means (14) suited to apply at least one layer of top coat (15) on the surface of the coated supporting element;

Preferably the system also comprises means (16) for further drying of the top coated supporting element.

The various means for treating the base layer and/or lacquer so as to evaporate a certain amount of water and/or solvent includes means to control various evaporation or drying parameters so as to verify and obtain the required degree of evaporation. This degree is mostly dependent on the residence time in/under the said means (such as e.g. oven/dryer) and the temperature of said means (oven/dryer). So, in general the degree is set by controlling these two parameters.

There are several advantages obtained by using the method of the present invention.

According to the method of the present invention, a base coat layer or layers can be selected without there being any requirement of capability of embossing the dried base coats, as the embossing step of the present invention is done differently. As a result, there is a wider selection of base coat materials available, which is advantageous.

According to the method of the present invention, at least one base coat layer is applied such that any damages in the leather, such as cuts and holes, are covered by this layer, which is possible by using base coats of medium viscosity, which prevents that the applied base coat follows exactly the surface of the damaged leather. This means that no buffing is needed to obtain a smooth surface from which the original damages are not visible anymore and that no separate upgrading step is needed which often results in undesirably stiffening of the leather product, this stiffening generally not being uniformly distributed along one piece of leather as the upgraded parts on the previously visible damages contain more of the upgrading coats and are thus more rigid than the previously undamaged leather parts. It is therefore advantageous that no buffing and no separate upgrading step is required in the method of the present invention. Nevertheless, it can be desired to do some buffing to level the surface of the leather before the coats are applied.

According to the method of the present invention, advantageously, the penetration of the coats into the leather is less due to the use of base coats of medium viscosity, thus resulting in higher flexibility and more softness and more pleasant haptics of the final leather product. This has as additional advantage that also leather of lesser quality can be used, while still obtaining final leather product of sufficient quality in terms of natural touch and softness, where such leather of lesser quality is available in larger quantities and at lower costs. It is an additional advantage that due to less penetration of the base coat material into the leather using base coats of medium viscosity, the amount of base coats that is applied can be less, which results in lower costs.

It is another advantage that there are no upgraded parts on the previous damages of the leather, and thus it is not possible that such upgraded parts are visible and also it is thus not possible that there would be uneven penetration of coats into the leather product, which would result in uneven grain break of the leather, giving undesirable appearance.

According to the method of the present invention, the number of process steps is small and these can be performed within a short time period. This enlarges the speed of production and decreases production costs.

According to the method of the present invention, there is no need to use a release paper, but instead an embossing cylinder is used to press the pattern into the layers on the leather. This is a big advantage since there is, contrary to using release paper, no limitation on the depth of embossing, thus enabling deep embossing. This is highly desirable because a large majority of the world market for embossed leather is for deep embossed leather. Embossing cylinders can be obtained with a large variety of embossing patterns whereas by using a release paper, the embossing pattern is dependent on the availability of the patterns available in release papers. Also exchanging embossing cylinders can be done quickly and easily whereas it is cumbersome to change the pattern to be embossed when release paper is used, because this entails the exchange of the release paper rolls. Release paper can break easily, which would result in production interruptions, whereas an embossing cylinder does not break. Because release paper can break easily, the speed of transporting the release paper through such a system is limited, whereas the speed of production is not limited when an embossing cylinder is used, which is thus another advantage. The dimensions of the system are also not dependent on the dimensions of available release paper, embossing cylinders being available in large widths, thus enabling to use full hides instead of half hides, which increases the cutting yield of the leather and thus reduces costs.

The above clearly shows that the method and the system proposed allow the set objectives to be achieved. In particular, it is clear that the proposed solution makes it possible to provide a product of the type described above, improving its embossing possibilities, softness and good haptics and reducing its production costs.

For the purpose of clarity and concise description, features are described herein as part of the same or separate embodiments, however, it will be appreciated that the scope of the invention may include embodiments having combinations of all or some of the features described. It is appreciated that this disclosure offers particular advantages to the leather industry.

Finally, the above-discussion is intended to be merely illustrative of the present systems and/or methods and should not be construed as limiting the appended claims to any particular embodiment or group of embodiments. The specification and drawing are accordingly to be regarded in an illustrative manner and are not intended to limit the scope of the appended claims. In interpreting the appended claims, it should be understood that the word "comprising" does not exclude the presence of other elements or acts than those listed in a given claim; the word "a" or "an" preceding an element does not exclude the presence of a plurality of such elements; any reference signs in the claims do not limit their scope; several "means" may be represented by the same or different item(s) or implemented structure or function; any of the disclosed devices or portions thereof may be combined together or separated into further portions unless specifically stated otherwise. The mere fact that certain measures are recited in mutually different claims does not indicate that a combination of these measures cannot be used to advantage. In particular, all working combinations of the claims are considered inherently disclosed.

It should furthermore be noted that among the various parts of the system further devices or machines suited to perform particular processing steps or to produce special effects can also be present.

## Claims

1. Method for making an upgraded and embossed laminar supporting element comprising a supporting element provided with several layers, comprising the following steps:
- applying at least one base layer of an aqueous coating to a surface of the supporting element;
- treating said at least one layer so as to evaporate from said at least one layer between 20% and 80% of the amount of water and optional solvent initially present;
- applying on the thus dried coating at least one layer of a lacquer;
- treating said at least one layer of a lacquer so as to evaporate from said at least one layer between 20% and 80% of the amount of water and/or solvent initially present; **characterized in that** it further comprises the steps of:
- applying on the thus dried lacquer layer at least one layer of foil;
- exerting a pressure on the combination of supporting element provided with said aqueous base coating layer, said lacquer layer and said foil layer in such a way so as to emboss the coated surface with morphological characteristics and wherein exerting said pressure is achieved using an embossing plate or an embossing cylinder or an embossing rotopress roller;
- removing said at least one layer of foil;
wherein an upgraded laminar supporting element refers to a laminar supporting element wherein grain defects are hided or removed.

2. Method according to claim 1, wherein said method further comprises a step of further drying the combination of supporting element provided with said aqueous base coating layer and said lacquer layer subsequent to removal of the foil.

3. Method according to claim 1 or 2, wherein said method further comprises after the step of removing the at least one layer of foil a step of applying at least one layer of top coat on the surface of the coated supporting element and further drying.

4. Method according to any of claims 1 to 3 wherein the amount of water and optional solvent evaporated from the at least one aqueous base coating layer is between 25% and 70% of the amount of water and optional solvent initially present, preferably between 30% and 60% of the amount of water and optional solvent initially present.

5. Method according to any of claims 1 to 4, wherein the aqueous coating is based on a polyurethane dispersion and/or a polyacrylate dispersion and/or a polyurethane/polyacrylate hybrid resin or a combination thereof.

6. Method according to any of claims 1 to 5, wherein the lacquer is an aqueous coating or a solvent-based coating.

7. Method according to any of claims 1 to 6, wherein the step of exerting a pressure is performed at medium temperature of between 50°C and 150°C.

8. Method according to any of claims 3 to 7, wherein the top coat is an aqueous coating based on a polyurethane dispersion and/or a polyacrylate dispersion and/or a polyurethane/polyacrylate hybrid resin or a combination thereof, optionally containing thickener, matting agents, slip agents, touch agents and/or crosslinker.

9. Method according to any of claims 1 to 8, wherein the at least one layer of an aqueous base coating, the at least one lacquer layer and the at least one top coat layer if present are applied by using a spraying application or by means of a roller coater.

10. Method according to any of claims 1 to 9, wherein the partial evaporation of water and/or solvent from the various layers provided on the supporting element is achieved by heating or by irradiation.

11. Method according to any of claims 1 to 10, wherein the aqueous base coating formulation has a medium viscosity of between 5 and 120 seconds on Ford Cup 6 scale, more preferably a viscosity between 10 and 100 seconds on Ford Cup 6 scale and most preferably a viscosity between 40 and 80 seconds on Ford Cup 6 scale.

12. Method according to any of claims 1 to 11, wherein
the at least one layer of an aqueous base coating is applied in a small thickness of between 16 g and 48 g of dried matter per square meter (1.5 and 4.5 gram of dried matter per square foot), more preferably in a thickness of dried matter of between 21 and 32 g of dried matter per square meter (2.0 and 3.0 gram per square foot).

13. Method according to any of claims 1 to 12, wherein the lacquer layer is applied in a small thickness of below 11 g of dried matter per square meter (1.0 gram of dried matter per square foot), more preferably in a thickness of dried matter of below 5.5 g of dried matter per square meter (0.5 gram per square foot).

14. Method according to any of claims 3 to 13, wherein the top coat layer is applied in a small thickness of between 5.5 and 16 g of dried matter per square meter (0.5 and 1.5 gram of dried matter per square foot).

15. Method according to any of claims 1 to 14, wherein the lacquer layer is based on nitrocellulose or polyurethane or cellulose acetate butyrate.

16. Method according to any one of claims 1 to 15, wherein the supporting element is leather.

17. System for making a laminar supporting element (17), comprising
- first application means (2) suited to apply at least one base layer (3) of an aqueous coating to a surface of a supporting element (1);
- means (4) for treating said at least one layer so as to evaporate from said at least one layer between 20 and 80% of the amount of water and optional solvent initially present, said means (4) including means to control various evaporation or drying parameters so as to verify and obtain said degree of evaporation;
- second application means (6) suited to apply at least one layer of lacquer on the thus dried coating (5);
- means (7) for treating said at least one layer of a lacquer so as to evaporate from said at least one layer between 20 and 80% of the amount of water and/or solvent initially present, said means (7) including means to control various evaporation or drying parameters so as to verify and obtain said degree of evaporation; **characterized in that** it further comprises:
- third application means suited to apply at least one layer of foil (8) on the thus dried lacquer coating;
- means (9) for exerting a pressure on the combination of supporting element provided with said aqueous base coating layer, said lacquer layer and said foil layer in such a way so as to emboss the coated surface with morphological characteristics (10) which means includes an embossing plate or an embossing cylinder or an embossing rotopress roller;
- means (11) for removing said at least one layer of foil.

18. System according to claim 17, wherein said system further comprises means (12) for further drying the combination (13) of supporting element provided with said aqueous base coating layer and said lacquer layer.

19. System according to claim 17 or 18, wherein said system further comprises a fourth application means (14) suited to apply at least one layer of top coat (15) on the surface of the coated supporting element and if needed means (16) for further drying of the top coated supporting element.

## Patentansprüche

1. Verfahren zur Herstellung eines veredelten und geprägten laminaren Trägerelements, umfassend ein Trägerelement, das mit mehreren Schichten versehen ist, umfassend die folgenden Schritte:
- Aufbringen mindestens einer Basisschicht einer wässrigen Beschichtung auf eine Oberfläche des Trägerelements;
- Behandeln der mindestens einen Schicht, so, um von der mindestens einen Schicht zwischen 20 % und 80 % der anfänglich vorhandenen Menge an Wasser und optional Lösungsmittel zu verdampfen;
- Aufbringen mindestens einer Schicht eines Lacks auf die solchermaßen getrocknete Beschichtung;
- Behandeln der mindestens einen Schicht eines Lacks, so, um von der mindestens einen Schicht zwischen 20 % und 80 % der anfänglich vorhandenen Menge an Wasser und/oder Lösungsmittel zu verdampfen;
**dadurch gekennzeichnet, dass** es ferner die Schritte umfasst:
- Aufbringen mindestens einer Folienschicht auf die solchermaßen getrocknete Lackschicht;
- Ausüben eines Drucks auf die Kombination aus Trägerelement, das mit der wässrigen Basisbeschichtungsschicht versehen ist, der Lackschicht und der Folienschicht auf solche Weise, dass die beschichtete Oberfläche mit morphologischen Eigenschaften geprägt wird, und wobei das Ausüben des Drucks unter Verwendung einer Prägeplatte oder eines Prägezylinders oder einer Prägerotationswalze erreicht wird;
- Entfernen der mindestens einen Folienschicht;
wobei sich ein veredeltes laminares Trägerelement auf ein laminares Trägerelement bezieht, worin Korndefekte verborgen oder entfernt werden.

2. Verfahren nach Anspruch 1, wobei das Verfahren ferner nach dem Entfernen der Folie einen Schritt von weiterem Trocknen der Kombination aus Trägerelement, das mit der wässrigen Basisbeschichtungsschicht versehen ist, und der Lackschicht, umfasst.

3. Verfahren nach Anspruch 1 oder 2, wobei das Verfahren ferner nach dem Schritt des Entfernens der mindestens einen Folienschicht einen Schritt von Aufbringen mindestens einer Schicht aus Decklack auf die Oberfläche des beschichteten Trägerelements und weiterem Trocknen umfasst.

4. Verfahren nach einem der Ansprüche 1 bis 3, wobei die Menge an Wasser und optional Lösungsmittel, die aus der mindestens einen wässrigen Basisbeschichtungsschicht verdampft wird, zwischen 25 % und 70 % der anfänglich vorhandenen Menge an Wasser und optional Lösungsmittel ist, vorzugsweise zwischen 30 % und 60 % der anfänglich vorhandenen Menge an Wasser und optional Lösungsmittel, ist.

5. Verfahren nach einem der Ansprüche 1 bis 4, wobei die wässrige Beschichtung auf einer Polyurethandispersion und/oder einer Polyacrylatdispersion und/oder einem Polyurethan/Polyacrylat-Hybridharz oder einer Kombination davon basiert.

6. Verfahren nach einem der Ansprüche 1 bis 5, wobei der Lack eine wässrige Beschichtung oder eine Beschichtung auf Lösungsmittelbasis ist.

7. Verfahren nach einem der Ansprüche 1 bis 6, wobei der Schritt des Ausübens eines Drucks bei einer mittleren Temperatur zwischen 50 °C und 150 °C durchgeführt wird.

8. Verfahren nach einem der Ansprüche 3 bis 7, wobei die Deckschicht eine wässrige Beschichtung auf Basis einer Polyurethandispersion und/oder einer Polyacrylatdispersion und/oder einem Polyurethan/Polyacrylat-Hybridharz oder einer Kombination davon ist, die optional Verdickungsmittel, Mattierungsmittel, Gleitmittel, Haptikmittel und/oder Vernetzungsmittel enthält.

9. Verfahren nach einem der Ansprüche 1 bis 8, wobei die mindestens eine Schicht einer wässrigen Basisbeschichtung, die mindestens eine Lackschicht und die mindestens eine Decklackschicht, falls vorhanden, unter Verwendung von Sprühauftrag oder mittels eines Walzenbeschichters aufgebracht werden.

10. Verfahren nach einem der Ansprüche 1 bis 9, wobei das teilweise Verdampfen von Wasser und/oder Lösungsmittel aus den verschiedenen Schichten, die auf dem Trägerelement bereitgestellt sind, durch Erwärmen oder durch Bestrahlung erreicht wird.

11. Verfahren nach einem der Ansprüche 1 bis 10, wobei die wässrige Basisbeschichtungsformulierung eine mittlere Viskosität von zwischen 5 und 120 Sekunden auf der Skala eines Ford-Auslaufbechers Nr. 6, bevorzugter eine Viskosität zwischen 10 und 100 Sekunden auf der Skala eines Ford-Auslaufbechers Nr. 6 und am bevorzugtesten eine Viskosität zwischen 40 und 80 Sekunden auf der Skala eines Ford-Auslaufbechers Nr. 6 ist.

12. Verfahren nach einem der Ansprüche 1 bis 11, wobei die mindestens eine Schicht einer wässrigen Basisbeschichtung in einer geringen Dicke zwischen 16 g und 48 g Trockensubstanz pro Quadratmeter (1,5 und 4,5 Gramm Trockensubstanz pro Quadratfuß), bevorzugter in einer Dicke von Trockensubstanz von zwischen 21 und 32 g Trockensubstanz pro Quadratmeter (2,0 und 3,0 Gramm pro Quadratfuß) aufgebracht wird.

13. Verfahren nach einem der Ansprüche 1 bis 12, wobei die Lackschicht in einer geringen Dicke von unter 11 g Trockensubstanz pro Quadratmeter (1,0 Gramm Trockensubstanz pro Quadratfuß), bevorzugter in einer Dicke von Trockensubstanz von unter 5,5 g Trockensubstanz pro Quadratmeter (0,5 Gramm pro Quadratfuß) aufgebracht wird.

14. Verfahren nach einem der Ansprüche 3 bis 13, wobei die Deckschicht in einer geringen Dicke von zwischen 5,5 und 16 g Trockensubstanz pro Quadratmeter (0,5 und 1,5 Gramm Trockensubstanz pro Quadratfuß) aufgebracht wird.

15. Verfahren nach einem der Ansprüche 1 bis 14, wobei die Lackschicht auf Nitrocellulose oder Polyurethan oder Celluloseacetatbutyrat basiert.

16. Verfahren nach einem der Ansprüche 1 bis 15, wobei das Trägerelement Leder ist.

17. System zur Herstellung eines laminaren Trägerelements (17), umfassend
- erste Aufbringungsmittel (2), geeignet, um mindestens eine Basisschicht (3) einer wässrigen Beschichtung auf eine Oberfläche eines Trägerelements (1) aufzubringen;
- Mittel (4) zum Behandeln der mindestens einen Schicht, so, um von der mindestens einen Schicht zwischen 20 und 80 % der anfänglich vorhandenen Menge an Wasser und optional Lösungsmittel zu verdampfen, wobei die Mittel (4) Mittel zum Steuern verschiedener Verdampfungs- oder Trocknungsparameter umfassen, so, um den Grad der Verdampfung zu verifizieren und zu erhalten;
- zweite Aufbringungsmittel (6), geeignet, um mindestens eine Lackschicht auf die solchermaßen getrocknete Beschichtung (5) aufzubringen;
- Mittel (7) zum Behandeln der mindestens einen Lackschicht, so, um von der mindestens einen Schicht zwischen 20 und 80 % der anfänglich vorhandenen Menge an Wasser und/oder Lösungsmittel zu verdampfen, wobei die Mittel (7) Mittel zum Steuern verschiedener Verdampfungs- oder Trocknungsparameter umfassen, so, um den Grad der Verdampfung zu verifizieren und zu erhalten;
**dadurch gekennzeichnet, dass** es ferner umfasst:
- dritte Aufbringungsmittel, geeignet, um mindestens eine Folienschicht (8) auf die solchermaßen getrocknete Lackschicht aufzubringen;
- Mittel (9) zum Ausüben eines Drucks auf die Kombination aus Trägerelement, das mit der wässrigen Basisbeschichtungsschicht versehen ist, der Lackschicht und der Folienschicht auf solche Weise, dass die beschichtete Oberfläche mit morphologischen Eigenschaften (10) geprägt wird, wobei die Mittel eine Prägeplatte oder einen Prägezylinder oder eine Prägerotationswalze umfassen;
- Mittel (11) zum Entfernen der mindestens einen Folienschicht.

18. System nach Anspruch 17, wobei das System ferner Mittel (12) zum weiteren Trocknen der Kombination (13) aus Trägerelement, das mit der wässrigen Basisbeschichtungsschicht versehen ist, und der Lackschicht umfasst.

19. System nach Anspruch 17 oder 18, wobei das System ferner vierte Aufbringungsmittel (14) umfasst, geeignet, um mindestens eine Schicht aus Decklack (15) auf die Oberfläche des beschichteten Trägerelements aufzubringen, und falls erforderlich Mittel (16) zum weiteren Trocknen des deckbeschichteten Trägerelements.

## Revendications

1. Méthode de fabrication d'un élément support stratifié valorisé et gaufré comprenant un élément support muni de plusieurs couches, comprenant les étapes suivantes :
- l'application d'au moins une couche de base d'un revêtement aqueux sur une surface de l'élément support ;
- le traitement de ladite au moins une couche de manière à évaporer de ladite au moins une couche entre 20 % et 80 % de la quantité d'eau et de solvant facultatif initialement présente ;
- l'application sur le revêtement ainsi séché d'au moins une couche d'une laque ;
- le traitement de ladite au moins une couche d'une laque de manière à évaporer de ladite au moins une couche entre 20 % et 80 % de la quantité d'eau et/ou de solvant initialement présente ; **caractérisée en ce qu'**elle comprend en outre les étapes de :
- application sur la couche de laque ainsi séchée d'au moins une couche de film ;
- exercice d'une pression sur la combinaison d'élément support munie de ladite couche de revêtement de base aqueux, de ladite couche de laque et de ladite couche de film de manière à gaufrer la surface revêtue avec des caractéristiques morphologiques et dans laquelle l'exercice de ladite pression est réalisé à l'aide d'une plaque à gaufrer ou d'un cylindre gaufreur ou d'un rouleau gaufreur de type presse rotative ;
- retrait de ladite au moins une couche de film ;
dans laquelle un élément support stratifié valorisé fait référence à un élément support stratifié dans lequel des défauts de grain sont masqués ou éliminés.

2. Méthode selon la revendication 1, dans laquelle ladite méthode comprend en outre une étape de séchage supplémentaire de la combinaison d'élément support munie de ladite couche de revêtement de base aqueux et de ladite couche de laque suite au retrait du film.

3. Méthode selon la revendication 1 ou 2, dans laquelle ladite méthode comprend en outre, après l'étape de retrait de l'au moins une couche de film, une étape d'application d'au moins une couche de finition sur la surface de l'élément support revêtu et un séchage supplémentaire.

4. Méthode selon l'une quelconque des revendications 1 à 3 dans laquelle la quantité d'eau et de solvant facultatif évaporée à partir de l'au moins une couche de revêtement de base aqueux est comprise entre 25 % et 70 % de la quantité d'eau et de solvant facultatif initialement présente, de préférence entre 30 % et 60 % de la quantité d'eau et de solvant facultatif initialement présente.

5. Méthode selon l'une quelconque des revendications 1 à 4, dans laquelle le revêtement aqueux est à base d'une dispersion de polyuréthane et/ou d'une dispersion de polyacrylate et/ou d'une résine hybride polyuréthane/polyacrylate ou d'une combinaisons de celles-ci.

6. Méthode selon l'une quelconque des revendications 1 à 5, dans laquelle la laque est un revêtement aqueux ou un revêtement à base de solvant.

7. Méthode selon l'une quelconque des revendications 1 à 6, dans laquelle l'étape d'exercice d'une pression est réalisée à une température moyenne comprise entre 50 °C et 150 °C.

8. Méthode selon l'une quelconque des revendications 3 à 7, dans laquelle la couche de finition est un revêtement aqueux à base d'une dispersion de polyuréthane et/ou d'une dispersion de polyacrylate et/ou d'une résine hybride polyuréthane/polyacrylate ou d'une combinaison de celles-ci, contenant éventuellement un épaississant, des agents de matité, des agents glissants, des agents de contact et/ou un réticulant.

9. Méthode selon l'une quelconque des revendications 1 à 8, dans laquelle l'au moins une couche d'un revêtement de base aqueux, l'au moins une couche de laque et l'au moins une couche de finition si présente sont appliquées en utilisant une application par pulvérisation ou au moyen d'une enduiseuse à rouleau.

10. Méthode selon l'une quelconque des revendications 1 à 9, dans laquelle l'évaporation partielle d'eau et/ou de solvant à partir des différentes couches disposées sur l'élément support est réalisée par chauffage ou par exposition à un rayonnement.

11. Méthode selon l'une quelconque des revendications 1 à 10, dans laquelle la formulation de revêtement de base aqueux présente une viscosité moyenne comprise entre 5 et 120 secondes sur une coupe de Ford numéro 6, plus préférentiellement une viscosité comprise entre 10 et 100 secondes sur une coupe de Ford numéro 6 et le plus préférentiellement une viscosité comprise entre 40 et 80 secondes sur une coupe de Ford numéro 6.

12. Méthode selon l'une quelconque des revendications 1 à 11, dans laquelle l'au moins une couche d'un revêtement de base aqueux est appliquée en une petite épaisseur comprise entre 16 g et 48 g de matière sèche par mètre carré (1,5 et 4,5 grammes de matière sèche par pied carré), plus préférentiellement en une épaisseur de matière sèche comprise entre 21 et 32 g de matière sèche par mètre carré (2, 0 et 3,0 grammes par pied carré).

13. Méthode selon l'une quelconque des revendications 1 à 12, dans laquelle la couche de laque est appliquée en une petite épaisseur inférieure à 11 g de matière sèche par mètre carré (1,0 gramme de matière sèche par pied carré), plus préférentiellement en une épaisseur de matière sèche inférieure à 5,5 g de matière sèche par mètre carré (0,5 gramme par pied carré).

14. Méthode selon l'une quelconque des revendications 3 à 13, dans laquelle la couche de finition est appliquée en une petite épaisseur comprise entre 5,5 et 16 g de matière sèche par mètre carré (0,5 et 1,5 g de matière sèche par pied carré).

15. Méthode selon l'une quelconque des revendications 1 à 14, dans laquelle la couche de laque est à base de nitrocellulose ou de polyuréthane ou de butyrate d'acétate de cellulose.

16. Méthode selon l'une quelconque des revendications 1 à 15, dans laquelle l'élément support est du cuir.

17. Système de fabrication d'un élément support stratifié (17), comprenant
- des premiers moyens d'application (2) appropriés pour appliquer au moins une couche de base (3) d'un revêtement aqueux sur Ps une surface d'un élément support (1) ;
- des moyens (4) pour traiter ladite au moins une couche de manière à évaporer de ladite au moins une couche entre 20 et 80 % de la quantité d'eau et de solvant facultatif initialement présente, lesdits moyens (4) incluant des moyens pour commander divers paramètres d'évaporation ou de séchage de manière à vérifier et obtenir ledit degré d'évaporation ;
- des deuxièmes moyens d'application (6) appropriés pour appliquer au moins une couche de laque sur le revêtement ainsi séché (5) ;
- des moyens (7) pour traiter ladite au moins une couche d'une laque de manière à évaporer de ladite au moins une couche entre 20 et 80 % de la quantité d'eau et/ou de solvant initialement présente, lesdits moyens (7) incluant des moyens pour commander divers paramètres d'évaporation ou de séchage de manière à vérifier et obtenir ledit degré d'évaporation ; **caractérisé en ce qu'**il comprend en outre :
- des troisièmes moyens d'application appropriés pour appliquer au moins une couche de film (8) sur le revêtement de laque ainsi séché ;
- un moyen (9) pour exercer une pression sur la combinaison d'élément support munie de ladite couche de revêtement de base aqueux, de ladite couche de laque et de ladite couche de film de manière à gaufrer la surface revêtue avec des caractéristiques morphologiques (10), lequel moyen inclut une plaque à gaufrer ou un cylindre gaufreur ou un rouleau gaufreur de type presse rotative ;
- des moyens (11) pour retirer ladite au moins une couche de film.

18. Système selon la revendication 17, dans lequel ledit système comprend en outre des moyens (12) pour sécher davantage la combinaison (13) d'élément support munie de ladite couche de revêtement de base aqueux et de ladite couche de laque.

19. Système selon la revendication 17 ou 18, dans lequel ledit système comprend en outre un quatrième moyen d'application (14) approprié pour appliquer au moins une couche de finition (15) sur la surface de l'élément support revêtu et, si nécessaire, des moyens (16) pour sécher davantage l'élément support revêtu d'une couche de finition.
